# EUROPEAN PATENT APPLICATION

(11) **EP 4 653 574 A1**
(43) Date of publication of application: **26.11.2025**
(21) Application number: 25178069.8
(22) Date of filing: 21.05.2025
(51) Int. Cl.: C23C 4/10, C23C 4/134, C04B 41/45, C04B 41/87

(54) **METHOD AND DEVICE FOR PLASMA SPRAYING OF POWDERS**

(30) Priority: 24.05.2024 US 202418674526
(71) Applicant: RTX Corporation, Farmington, CT 06032 (US)
(72) Inventor: GAO, Ryan, Hartford, CT 06103 (US); GOMEZ, Juan, El Paso, TX 79902 (US); ZAHED, Nizar, Glastonbury, CT 06033 (US); DWIVEDI, Gopal, Woodbury, NY 11797-1334 (US)
(74) Representative: Dehns

(57) **Abstract**

A method and device are described for plasma spraying of multiple powders. A first powder is introduced into a plasma jet (90) at a first distance (h₁) from a nozzle (50) of a plasma spray torch (10). A second powder is introduced into the plasma jet (90) at a second distance (h₂) from the nozzle (50) of the plasma spray torch (10). The second distance (h₂) is greater than the first distance (h₁) so that the second powder is introduced into the plasma jet (90) at a different point than which the first powder enters the plasma jet (90). The method and device can be used to simultaneously plasma spray different powders that have, for example, different compositions and/or different particle morphology.

## Description

### FIELD OF THE INVENTION

The present disclosure relates generally to methods of preparing environmental barrier coatings and abradable coatings and devices for use in such methods. In particular, the present disclosure relates to methods and devices for use in preparing environmental barrier coatings and abradable coatings for ceramic matrix materials (CMCs).

### BACKGROUND OF THE INVENTION

Gas turbine engines, in general, include a fan section, a compressor section, a combustion chamber, and a turbine section. Air enters through the fan section and is compressed in the compressor section before being introduced into the combustion section. In the combustion section, the air is mixed with fuel and ignited to generate a high-energy, high temperature gas flow. The high-energy, high temperature gas flow is expanded in the turbine section which is used to create thrust and to drive the compressor and fan sections.

Thus, turbomachinery, such as gas turbine engines, have components that are exposed to hostile environments due to high temperatures. Such components can include a substrate made from ceramic matrix materials (CMCs) which have the capability of withstanding high temperatures. These CMC components can be provided with environmental barrier coatings (EBCs) applied to the surface of the substrate to protect the substrate from corrosive forces due to, for example, exposure to high temperature water vapor.

In addition to EBCs, another type of coating that can be used in turbomachinery are abradable coatings. Such abradable coatings are provided on surfaces of components, e.g., seals, that may come into contact (rub interaction) with moving parts of the engine, for example, blades.

For example, the turbine sections of gas turbine engines includes low and high pressure turbines having a plurality of turbine blades. The turbine section further includes a blade outer air seal (BOAS) to prevent/minimize leakage of the high-energy, high temperature gas flow, i.e., the working fluid, around the blade tips as it flows through the turbine section. Avoiding/minimizing such leakage increases the overall operating efficiency of the gas turbine engine.

Components that are in close proximity to rotating blades, such as BOAS as mentioned above, can come into contact with the blade tips during operation. To avoid blade damage, which can lead to serious damage to the engine, abradable coatings can be provided so that when rub interaction occurs between the blade and, for example, a seal, the damage is absorbed by the coating, and not the blade. These abradable coatings are designed so that the blade tips act as an abrading component with respect to the abradable coating.

A further type of coating used in turbomachinery such as jet engines are thermal barrier coatings (TBC). TBCs are applied to components that are exposed to high temperatures. TBC are ceramic coatings that exhibit very low thermal conductivity and thus protect the underlying substrate to which they are applied from excessive temperatures. For example, TBCs can be applied to the surface of turbine blades to provide thermal insulation to allow for blade surface temperatures to exceed that which would be detrimental to the underlying blade substrate.

EBCs, TBCs, and abradable coatings can be prepared by plasma spraying using powders. Typical plasma spraying processes include air or atmospheric plasma spraying (APS), vacuum plasma spraying (VPS), low pressure plasma spraying (LPPS), shrouded plasma spraying, suspension plasma spraying (SPS), and hybrid forms thereof. These coatings are often made from a combination of materials. In the air plasma spaying process the powders of the different materials are typically combined together and introduced into the plasma flame or plasma jet as a blended mixture. However, upon introduction into the plasma jet as a blend, the individual constituents of the blend may flow differently through the jet due to, for example, differences in density and/or particle morphology. This can result in the constituents having different flow patterns or different flow rates through the plasma jet. This in turn can result in the coating formed by the plasma spraying exhibiting undesirable layering of constituents and nonhomogeneous distribution of materials.

There exists a continuing to need for methods and techniques for producing EBCs, TBCs and abradable coatings to enhance the properties of such coatings and/or facilitate the manufacture thereof.

### SUMMARY OF THE INVENTION

In general, the present disclosure relates to the preparation of coatings by plasma spraying (e.g., APS, VPS, LPPS, shrouded plasma spraying, suspension plasma spraying, and hybrid forms thereof) multiple powder compositions that have differing physical and/or chemical properties so as to achieve more uniform distribution of the materials in the resultant coatings.

According to an aspect of the present disclosure, there is provided a method of plasma spraying powders comprising:
generating a plasma jet using a plasma spray torch having a nozzle through which the generated plasma jet is discharged;
introducing a first powder into the plasma jet at a first distance from the nozzle of the plasma spray torch; and
introducing a second powder into the plasma jet at a second distance from the nozzle of the plasma spray torch;
wherein the second distance is greater than the first distance so that the second powder is introduced into the plasma jet at a different point than which the first powder is introduced into the plasma jet.

According to another aspect of the present disclosure, there is provided a coated article comprising:
a ceramic matrix composite substrate and a coating system;
wherein the coating system comprises a coating layer having a first phase and a second phase;
wherein the coating layer is prepared by simultaneously plasma spraying a first powder and a second powder using a plasma spray torch having a nozzle through which the generated plasma jet is discharged,
wherein the first powder which forms the first phase of the coating layer is introduced into the plasma jet at a first distance from the nozzle of the plasma spray torch,
wherein the second powder which forms the second phase of the coating layer is introduced into the plasma jet at a second distance from the nozzle of the plasma spray torch, and
wherein the second distance is greater than the first distance so that the second powder is introduced into the plasma jet at a different point than which the first powder is introduced into the plasma jet.

According to another aspect of the present disclosure, there is a plasma spray device comprising:
a plasma spray torch having a nozzle through which a generated plasma jet is discharged from the plasma spray torch; and
a plurality of injector lines for separately injecting powders into a plasma jet generated by the plasma spray torch, each injector line having an injector outlet port, wherein the injector outlet ports are spaced at different distances from the nozzle to introduce powders at different points along a longitudinal line parallel to the longitudinal axis of the plasma jet.

In further examples of the present disclosure, including further examples of the above, the coating that is prepared is an EBC. In further embodiments of the present disclosure, including further embodiments of the above exemplary embodiments, the coating that is prepared is a TBC. In further embodiments of the present disclosure, including further embodiments of the above exemplary embodiments, the coating that is prepared is an abradable coating.

In further examples of the present disclosure, including further examples of the above, the first powder has a different composition than the second powder.

In further examples of the present disclosure, including further examples of the above, the first powder has a different morphology than the second powder.

In further examples of the present disclosure, including further examples of the above, the first powder contains particles of hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, a silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄), mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu), and
the second powder contains particles of hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, a silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄), mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu),
wherein the second powder has a different composition than the first powder or has a different morphology than the first powder.

In further examples of the present disclosure, including further examples of the above, the first powder is a Hf-silicate powder or a Zr-silicate powder, and the second powder is a Hf-silicate powder or a Zr-silicate powder, wherein the second powder has a different composition than the first powder or has a different morphology than the first powder.

In further examples of the present disclosure, including further examples of the above, the first powder is a rare earth monosilicate (RE₂SiO₅) powder or a rare earth disilicate (RE₂Si₂O₇) powder, and the second powder is a rare earth monosilicate (RE₂SiO₅) powder or a rare earth disilicate (RE₂Si₂O₇) powder, wherein the second powder has a different composition than the first powder or has a different morphology than the first powder.

In further examples of the present disclosure, including further examples of the above, the first powder is hafnia or zirconia and the second powder is a stabilizing agent selected from alkaline oxides and rare earth oxides for producing stabilized (partially or fully) hafnia or zirconia coatings.

In further examples of the present disclosure, including further examples of the above, one of the first and second powders is a matrix material and the other is a dislocator material.

In further examples of the present disclosure, including further examples of the above, one of the first and second powders is a matrix material selected from hafnium silicate, zirconium silicate, rare earth silicates, rare earth phosphates, aluminosilicates, and HfO₂-SiO₂-rare earth oxide, which in each case may be stoichiometric or non-stoichiometric, and combinations thereof (for example, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄), mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu), and
the other of the first and second powders is a dislocator material selected from aluminosilicates (e.g., mullite, anorthite), hexagonal boron nitride (hBN), alkaline earth tungstates (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, for example, CaWO₄, BaWO₄, ZnWO₄, BaMoO₄, SrMoO₄, YPO₄, or LaPO₄, wherein the first and second powders have different compositions.

In further examples of the present disclosure, including further examples of the above, a third powder is introduced into the plasma jet at a third distance from the nozzle of the plasma spray torch, wherein the third distance is greater than the second distance so that the third powder is introduced into the plasma jet at a different point than which the first powder or the second powder is introduced into the plasma jet.

In further examples of the present disclosure, including further examples of the above, the first powder, the second powder, and the third powder each have different compositions.

In further examples of the present disclosure, including further examples of the above, the first powder, the second powder, and the third powder each have different morphologies.

In further examples of the present disclosure, including further examples of the above, one of the first powder, second powder, and third powder is a matrix material, another is a dislocator material, and the remaining powder is a pore forming material.

In further examples of the present disclosure, including further examples of the above,
the matrix material is selected from stoichiometric or non-stoichiometric Hf-silicates, Zr-silicates), rare earth monosilicates (RE₂SiO₅), rare earth disilicates (RE₂Si₂O₇), rare earth phosphates (REPO₄), and combinations thereof, wherein RE is Sc, Y, La, Ce, Pr, Nd, Pm, Sm, Eu, Gd, Tb, Dy, Ho, Er, Tm, Yb, or Lu,
the dislocator material is selected from aluminosilicates, hexagonal boron nitride alkaline earth (M) tungstates (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, and
the pore forming material is a polymer, e.g., polyester or polymethylmethacrylate.

In further examples of the present disclosure, including further examples of the above, ceramic matrix composite (CMC) substrate is an SiC/SiC or C/SiC CMCs.

### BRIEF DESCRIPTION OF FIGURES

The features of the disclosure believed to be novel and the elements characteristic of the invention are set forth with particularity in the appended claims. Implementations of the inventive concepts disclosed herein may be better understood when consideration is given to the following description of the figures. The figures are for illustration purposes only and are not drawn to scale. These drawings are not necessarily to scale, and which some features may be exaggerated and some features may be omitted or may be represented schematically in the interest of clarity. Like reference numerals in the drawings may represent and refer to the same or similar element, feature, or function. The disclosure itself, however, both as to organization and method of operation, can best be understood by reference to the description of the preferred embodiment(s) which follows, taken in conjunction with the accompanying drawings in which:
Fig. 1 schematically illustrates a plasma spray system having a plurality of injection lines for introducing powder compositions into the plasma jet,
Fig. 2 illustrates a cross section of a coating containing a matrix material and a dislocator material, and
Fig. 3 illustrates a cross section of a coating containing a matrix material, a dislocator material, and a porosity former material.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

As noted above, EBCs are coatings that can be applied to CMC substrates to protect the CMC from harsh environments experienced within gas turbine engines. EBCs typically have a thickness of up to 1,000 µm, for example, 25 to 1,000 µm, 25 to 50 µm, or 50 to 200 µm. TBCs coatings are applied to CMC substrates to protect the substrate from excessively high temperatures. TBCs typically have a thickness of up to 1,000 µm, e.g. 100 to 1,000 µm, 100 to 400 µm, or 200 to 300 µm. Abradable coatings are applied to CMC substrates to prevent damage to moving parts, like turbine blades, that may come into contact with a CMC component (e.g., a BOAS) during operation of a gas turbine engine. Abradable coatings can have a thickness of, for example, 150 µm to 1500 µm, such as 150 to 750 µm. EBCs, TBCs, and abradable coatings can be applied to substrates by plasma spraying.

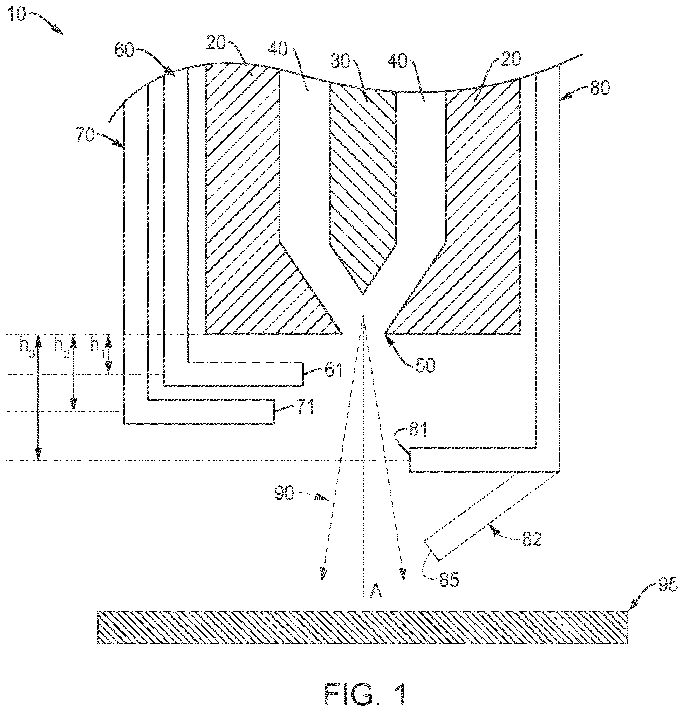

Fig. 1 schematically illustrates an air plasma spray torch or gun 10 having an anode 20 and a cathode 30. An electric arc is created between anode 20 and a cathode 30. Gas flowing through annular passageway 40 is forced to flow through the electric arc thereby generating a high temperature plasma flame or jet 90 which is discharged from the torch/gun via nozzle 50. The device further includes a plurality of injection lines 60, 70, and 80 each having an outlet port 61, 71, and 81, respectively. Upon passage through the plasma jet, the particles are deposited on the surface of a substrate 95.

As shown in Fig. 1, the outlet port 61 of injection line 60 is positioned at a distance h₁ from the nozzle 50, the outlet port 71 of injection line 70 is positioned at a distance h₂ from the nozzle 50, and the outlet port 81 of injection line 80 is positioned at a distance h₃ from the nozzle 50. Distance h₂ is greater than distance h₁, and distance h₃ is greater than distance h₂, and greater than distance h₁. Additionally, the outlets of the different injection lines can be positioned along the same longitudinal line, parallel to the longitudinal axis A of the plasma flame, as shown by outlet ports 61 and 71. Alternatively, the outlets can be positioned at different clocking positions relative to the plasma jet (see, e.g., outlet ports 61 and 81).

The injection line outlet port can be positioned so that the stream of powder composition is discharged from the injection line in a direction that is perpendicular to the longitudinal axis A of the plasma flame. See outlet ports 61, 71, and 81. Alternatively, the injection line can be angled 82 so that the injection line outlet port 85 introduces the stream of the powder composition at any angle (e.g., 30°, 45°, or 75°).

The device permits powders having different properties to be injected into the plasma jet at different locations. For example, if the particles of a one powder composition have a size or density or shape/morphology that cause the particles to move relatively slower through the plasma jet, such a powder could be introduced at one of the downstream locations, relative to the plasma flow, via outlet ports 71 or 81. Conversely, if the particles of another powder composition have a size or shape/morphology that cause the particles to move relatively faster through the plasma jet, such a powder could be introduced at an upstream location relative to the plasma flow, e.g., via outlet ports 61.

This method provides better control for the flow of the particles through the plasma jet and results in better control of the formation of the resultant coating formed by the particles on substrate 95. The method can reduce the occurrence of layering of constituents and thus provide a coating that exhibits a more uniform distribution of the constituents. In particular, the method reduces the segregation of the particles of the different powder compositions and thereby enhancing phase and porosity distributions and providing a coating with a more uniform microstructure.

Additionally, using different outlet ports spaced at different distances from the nozzle avoids the use of powder blends and allows for each of the different materials to be introduced at its own individual mass flow rate and velocity. This permits further flexibility in controlling the flow of particles through the plasma jet.

For example, layers of EBCs can be made from a variety of materials such as hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄), mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu). The layer can involve a mixture of materials such as a mixture of hafnon (HfSiO₄) and zircon (ZrSiO₄), or a mixture of rare earth monosilicate and rare earth disilicate. The method according to the present disclosure permits such coatings to be made by plasma spraying without requiring a blending step to combine the different powders. Additionally, the method allows the use of such different powders, even if the powders exhibit properties that cause their flow through the plasma jet to vary significantly, by adjusting both the point of introduction into the plasma jet and the manner in which the powders are introduced into the plasma jet (mass flow rate, velocity, etc.).

TBC coatings may also often involve the combination of materials. For example, a TBC coating can be a hafnia or zirconia coating stabilized (partially or fully) by the addition of another component, for example, stabilized by an alkaline or rare earth metal) , such as yttrium-stabilized-zirconia (Y₂O₃-stabilized ZrO₂), magnesium-stabilized-zirconia, calcium-stabilized-zirconia, cerium-stabilized-zirconia, or combinations thereof. These coatings can be prepared in accordance with the disclosed methods by, for example, using a first powder which is hafnia or zirconia and a second powder which is a stabilizing agent selected from alkaline oxides and rare earth oxides for producing stabilized.

Abradable coatings also often involve the combination of materials to achieve desired abradability. For example, an abradable coating may include a dislocator phase with a matrix phase wherein dislocator phase impacts the internal mechanical strength of the coating. The dislocator material may, for example, provide a mechanical mismatch with the matrix material enhancing abradability within the matrix or along the dislocator/matrix interfaces, or may have a lower shear strength than the matrix and thereby aid abradability through deformation within the dislocator phase and along the dislocator/matrix interfaces.

Thus, the abradable coating can be made from a first powder of the matrix material and a second powder of the dislocator material. By way of example, the first powder of the matrix material can be selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof (for example, silica-rich Hf silicate, HfSiO₄, a silica-rich Zr-silicate, ZrSiO₄, a rare earth monosilicate (RE₂SiO₅), a rare earth disilicate (RE₂Si₂O₇), a rare earth phosphate (REPO₄) powder, mullite, anorthite, sodium aluminosilicate, or any combination thereof, wherein RE is Sc, Y, La, Ce, Pr, Nd, Pm, Sm, Eu, Gd, Tb, Dy, Ho, Er, Tm, Yb, or Lu). On the other hand, the second powder of the dislocator material can be selected from aluminosilicates (e.g., mullite, anorthite), hexagonal boron nitride (hBN), alkaline earth tungstate (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, such as, CaWO₄, BaWO₄, ZnWO₄, BaMoO₄, SrMoO₄, YPO₄, or LaPO₄.

Using the methods according to the present disclosure, these two powders can be introduced separately at different points along the path of the plasma jet to control the flow paths of the individual powders through the plasma jet. Also, since the powders are introduced separately, the manner in which the powders are introduced into the plasma jet (mass flow rate, velocity, etc.) can be tailored to the individual powder further increasing the ability to control the individual powder flow paths.

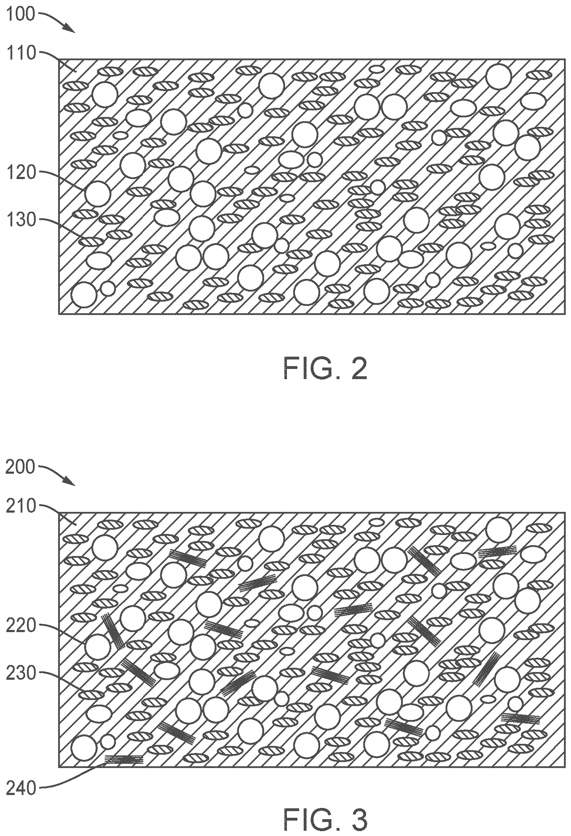

Fig. 2 illustrates a cross section of an abradable coating 100 containing both a matrix material 110 and a dislocator material 130. As shown in Fig. 2, the coating contains matrix material 110, for example, ytterbium disilicate (Yb₂Si₂O₇), and dispersed therein a dislocator material 130, for example, calcium tungstate (CaWO₄). In this embodiment, the matrix material 110 also exhibits pores 120 that can result from the plasma spray application procedure.

Abradable coatings may also include particles of fugitive material that act as pore forming agents. The pore forming agents are incorporated into the abradable coating during plasma spraying and then are subsequently removed by heating. The increase in porosity achieved through the use of such pore forming materials increase abradability of the coating. These pore forming materials can be used alone or in conjunction with dislocator materials.

Thus, the abradable coating can be made from a first powder of the matrix material and a second powder of the pore forming material. By way of example, the first powder of the matrix material can be selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof, as described above. The second powder of pore forming material can be, for example, a polymer such as a polyester or a polymethylmethacrylate.

Using the method according to the present disclosure, the matrix material powder and pore forming powder can be introduced separately at different points along the path of the plasma j et to control the flow paths of the individual powders through the plasma jet. Since the powders are introduced separately, the manner in which the powders are introduced into the plasma jet (mass flow rate, velocity, etc.) can be tailored to the individual powder.

The abradable coating can also be made from a first powder of the matrix material, a second powder of the pore forming material, and a third powder of dislocator material. By way of example, the first powder of the matrix material can be selected from Hf-silicate (HfSiO₄), Zr-silicate (ZrSiO₄), rare earth monosilicates (RE₂SiO₅), hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof. The second powder of pore forming material can be, for example, a polymer such as polyesters and polymethylmethacrylates. The third powder of the dislocator material can be selected from aluminosilicates (e.g., mullite, anorthite), hexagonal boron nitride (hBN), alkaline earth tungstate (MWO₄), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, such as, CaWO₄, BaWO₄, ZnWO₄, BaMoO₄, SrMoO₄, YPO₄, or LaPO₄.

Fig. 3 shows a cross section of an abradable coating 200. As shown in Fig. 3, the coating contains matrix material 210, for example, ytterbium disilicate (Yb₂Si₂O₇), and dispersed therein a dislocator material 230, for example, calcium tungstate (CaWO₄). Also dispersed in the matrix material 210 are particles of pore forming material 240. In this embodiment, the matrix material 210 also exhibits pores 220.

The corresponding structures, material, acts, and equivalents of all means or steps plus function elements in the claims below are intended to include any structure, material, or act for performing the function in combination with other claimed elements are specifically claimed. The above description of the present invention has been presented for purposes of illustration and description, but is not intended to be exhaustive or limited to the invention in the form disclosed. Many modifications and variations will be apparent to those of ordinary skill without departing from the scope of the invention. The specific embodiment(s) described above were chosen and described in order to explain principles of the invention and the practical applications thereof, and to enable others of ordinary skill in the art to understand the invention for embodiments with various modifications as are suited to the particular use contemplated.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope of the present disclosure.

## Claims

1. A method of plasma spraying powders comprising:
generating a plasma jet (90) using a plasma spray torch (10) having a nozzle (50) through which the generated plasma jet (90) is discharged;
introducing a first powder into the plasma jet (90) at a first distance (h₁) from the nozzle (50) of the plasma spray torch (10); and
introducing a second powder into the plasma jet (90) at a second distance (h₂) from the nozzle (50) of the plasma spray torch (10);
wherein said second distance (h₂) is greater than said first distance (h₁) so that the second powder is introduced into the plasma jet (90) at a different point than which the first powder is introduced into the plasma jet (90).

2. The method according to claim 1, wherein the first powder has a different composition and/or morphology than the second powder.

3. The method according to claim 1 or 2, wherein
said first powder is hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof, and
said second powder is selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof,
wherein the second powder has a different composition than the first powder or has a different morphology than the first powder.

4. The method according to claim 1, wherein
said first powder is a Hf-silicate powder or a Zr-silicate powder, and
said second powder is a Hf-silicate powder or a Zr-silicate powder,
wherein the second powder has a different composition than the first powder or has a different morphology than the first powder.

5. The method according to claim 1, wherein
said first powder is a rare earth monosilicate (RE₂SiO₅) powder or a rare earth disilicate (RE₂Si₂O₇) powder, and
said second powder is a rare earth monosilicate (RE₂SiO₅) powder or a rare earth disilicate (RE₂Si₂O₇) powder,
wherein the second powder has a different composition than the first powder or has a different morphology than the first powder.

6. The method according to any preceding claim, wherein one of said first powder and said second powder is a matrix material (110; 210) and the other of said first powder and said second powder is a dislocator material (130; 230).

7. The method according to claim 6, wherein
said matrix material (110; 210) is selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof, and
said dislocator material (130; 230) is selected from aluminosilicates, hexagonal boron nitride, alkaline earth (M) tungstates (MWO4), alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu.

8. The method according to any preceding claim, further comprising:
introducing a third powder into the plasma jet (90) at a third distance (h₃) from the nozzle (50) of the plasma spray torch (10);
wherein said third distance (h₃) is greater than said second distance (h₂) so that the third powder is introduced into the plasma jet (90) at a different point than which the first powder or the second powder is introduced into the plasma jet (90).

9. The method according to claim 8, wherein the first powder, the second powder, and the third powder each have different compositions and/or different morphologies.

10. The method according to claim 8 or 9, wherein one of said first powder, second powder, and third powder is a matrix material (110; 210), another of said first powder, second powder, and third powder is a dislocator material (130; 230), and the remaining powder is a pore forming material (240).

11. The method according to claim 10, wherein
said matrix material (110; 210) is selected from hafnium silicate, zirconium silicate, rare earth silicates, rare earth phosphates, aluminosilicates, or HfO₂-SiO₂-rare earth oxide, which in each case may be stoichiometric or non-stoichiometric, and combinations thereof,
said dislocator material (130; 230) is selected from aluminosilicates, hexagonal boron nitride, alkaline earth (M) tungstate (MWO4)s, alkaline earth molybdates (MMoO₄), rare earth phosphates (REPO₄), and combinations thereof, wherein M is Mg, Ca, Sr, or Ba, and RE is Sc, Y, La, Ce, Pr, Nd, Pm, Sm, Eu, Gd, Tb, Dy, Ho, Er, Tm, Yb, or Lu, and
said pore forming material (240) is a polymer, optionally selected from polyesters and polymethylmethacrylates.

12. The method according to claim 7 or 11, wherein said dislocator material (130; 230) is selected from CaWO₄, BaWO₄, ZnWO₄, BaMoO₄, SrMoO₄, YPO₄, and LaPO₄.

13. A coated article comprising:
a ceramic matrix composite substrate (95) and a coating system (100; 200);
wherein said coating system (100; 200) comprises a coating layer having a first phase and a second phase;
wherein said coating layer is prepared by simultaneously plasma spraying a first powder and a second powder using a plasma spray torch (10) having a nozzle (50) through which a generated plasma jet (90) is discharged,
wherein the first powder which forms said first phase of the coating layer is introduced into the plasma jet (90) at a first distance (h₁) from the nozzle (50) of the plasma spray torch (10),
wherein the second powder which forms said second phase of the coating layer is introduced into the plasma jet (90) at a second distance (h₂) from the nozzle (50) of the plasma spray torch (10), and
wherein said second distance (h₂) is greater than said first distance (h₁) so that the second powder is introduced into the plasma jet (90) at a different point than which the first powder is introduced into the plasma jet (90).

14. The coated article according to claim 13, wherein:
one of said first powder and said second powder is a matrix material (110; 210) and the other of said first powder and said second powder is a dislocator material (130; 230); and/or
said coating layer further comprises a third phase and said coating layer is prepared by simultaneously plasma spraying said first powder, said second powder, and a third powder,
wherein the third powder which forms said third phase of the coating layer is introduced into the plasma jet (90) at a third distance (h₃) from the nozzle (50) of the plasma spray torch (10), and
wherein said third distance (h₃) is greater than said second distance (h₂) so that the third powder is introduced into the plasma jet (90) at a different point than which the first powder or the second powder is introduced into the plasma jet (90).

15. A plasma spray device comprising:
a plasma spray torch (10) having a nozzle (50) through which a generated plasma jet (90) is discharged from the plasma spray torch (10);
a plurality of injector lines (60, 70, 80) for separately injecting powders into a plasma jet (90) generated by the plasma spray torch (10), each injector line (60, 70, 80) having an injector outlet port (61, 71, 81; 85), wherein the injector outlet ports (61, 71, 81; 85) are spaced at different distances (h₁, h₂, h₃) from the nozzle (50) of said plasma spray torch (10) to introduce powders at different points along a longitudinal line parallel to the longitudinal axis (A) of the plasma jet (90).
